# EUROPEAN PATENT APPLICATION

(11) **EP 2 293 194 A1**
(43) Date of publication of application: **09.03.2011**
(21) Application number: 09305811.3
(22) Date of filing: 04.09.2009
(51) Int. Cl.: G06F 11/22

(54) **Method and apparatus for testing an USB OTG hardware interface**

(71) Applicant: ST-Ericsson (Grenoble) SAS, 38000 Grenoble (FR); ST-Ericsson (France) SAS, 38000 Grenoble (FR); ST-Ericsson SA, 1228 Plan-les-Ouates (CH)
(72) Inventor: Belet, Christophe, 72250 Parigne l'Evèque (FR); Okker, Jani, 00410 Helsinki (FI); Teronen, Antti, 00410 Helsinki (FI)
(74) Representative: Millet, Sandrine

(57) **Abstract**

A device is able to work alternatively in a first operational mode or in a second operational mode. In a normal state, the device carries out a selection of the operational mode between the first and the second operational mode, this selection being based on a value of a specific line of an interface of the device; and in a test state, the device ignores the value of said specific line regarding the selection of the operational mode.

On the device staying in the first operational mode, a test command indicating a beginning of a test is received. Then, the device configures the test state. The device provides an indication relative to the value of the specific line on the device side. It receives a test command indicating an end of the test; and, then, configures the normal state.

## Description

### FIELD OF THE INVENTION

The present invention generally relates to test USB ('Universal Serial Bus') device, and more particular USB OTG devices (OTG for 'On The Go').

### RELATED ART

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Classically, USB architecture is a master-slave architecture wherein a USB Host device acts as the master, and a USB Peripheral device acts as the slave.

USB OTG introduces the concept of a USB device which can perform itself the master, as a Host device, and the slave, as a Peripheral device, alternatively. This concept of OTG devices has been developed in addition to the specifications of the Universal Serial Bus (USB), originally designed as an interface between Personal Computers PCs and peripherals. In particular, the specification "On-The-Go and Embedded Host Supplement to the USB Revision 2.0 Specification" - Revision 2.0 - May 8, 2009 has been introduced to allow many devices, for example mobile phones or cameras, that are not PCs in the classic sense, to connect directly to peripherals, without requiring them to support the full range of USB peripherals.

USB OTG defines two operational modes for the same device: OTG A-device and OTG B-device, A-device acting as USB Host and B-device acting as a USB Device. For that purpose, an OTG device includes a protocol stack for the Host mode and a protocol stack for the Peripheral mode.

A specific line is introduced in an USB interface for an OTG device, which is referred as an ID line. This ID line makes the OTG device able to select its operational mode. More precisely, depending on the value of this specific line, the device decides to work either in the Host mode or in the Peripheral mode.

This specific line corresponds to an ID pin introduced in the standard USB connector. If the ID pin is grounded, the device acts as a Host device. If the ID pin is floating the device acts as a Peripheral device.

It is important to be able to test a USB OTG of a device, notably during a phase of production. Testing a USB OTG can correspond to ensure if the USB interface path is correctly connected between a USB management part and a USB connector part of the device (including all passive components like filter ESD protection,...).

it is required to test the USB interface in Peripheral mode and in Host mode. When the USB interface is used as communication link between a test equipment and a device to be tested, it is needed to switch from the Host mode to the Peripheral mode and vice-versa several times during a test sequence.

Each switch from one operational mode to the other one implies a switch from one protocol stack to the other one. Such operation introduces delay in a test sequence.

Moreover, because of the operational mode switch, the test equipment must support both Host and Peripheral roles of a USB OTG device. Consequently, this type of equipment is complex and expensive.

### SUMMARY OF THE INVENTION

To address these needs, a first aspect of the present invention relates to a method for testing a device which is able to work alternatively in a first operational mode or in a second operational mode;
wherein, in a normal state, said device carries out a selection of the operational mode between the first and the second operational mode, said
selection being based on a value of a specific line of an interface of the device; and
in a test state, said device ignores the value of said specific line regarding the selection of the operational mode;
said method comprising the following steps, which are carried out on said device staying in the first operational mode:
/a/ receiving a test command indicating a beginning of a test;
/b/ configuring the test state;
/c/ providing an indication relative to the value of the specific line on the device side;
/d/ receiving a test command indicating an end of the test; and
/e/ configuring the normal state.

When such a device works in the normal state, the operational mode is selected based on the value of the specific line on its interface. Consequently, it is possible to determine if the device takes into account a change on the specific line based on the current operational mode of the device.

It is completely different when the device works in the test state. Indeed, in the test state, the device does not change its operational mode based on the value of the specific line because such value is ignored. Thus, when the device is in the test state, it is not possible to determine if the value of the specific line is took into account based on a operational mode change.

However, advantageously, an indication relative to the value of the specific line is provided during the test. Thanks to this indication, it is possible to obtain information on the behaviour of the device, without triggering any change of operational mode. Thus, advantageously, no delay is introduced by any change of operational mode and the test can be performed efficiently.

This indication allows testing the interface of the device. Indeed, even if the device in a test state is not sensitive to the value of the specific line regarding the operational mode, it is able to detect this value and to provide an indication for this detected value. Consequently, a test equipment can be informed about the fact that the device is able to take into account the value of the specific line correctly or not.

In one embodiment, the specific line can have two different values, one high value and one low value.

In this condition, a test equipment can trigger a change of the value of the specific line on the device interface and check if this change is correctly handled at the device level. If a change of the value of the specific line is not detected at the device level, it means that there is a problem regarding the interface or any component further comprised in the device.

Thanks to these characteristics, the device can be tested without switching its operational mode. Indeed, the device stays in the same operational mode during the test sequence, and, consequently, the test equipment can stay in the same operational mode too.

It allows performing efficient test sequences without loosing time in switching from one operational mode to another one, as it is the case according to the prior art.

Moreover, this test sequence can be carried out by a test equipment which is adapted to operate in one operational mode only. Consequently, the cost of such test equipment can be reduced compared with a test equipment able to work in both operational modes as in the prior art.

These advantages are based on the test state handled at the device level. Indeed, configuring this test state allows avoiding switching operation mode, while allowing retrieving some testing information from the device.

A device configured in the test state ignores the value of the specific line and consequently, it does not switch from one operational mode to the other one. However, the device configured in test state is able to detect the value of the specific line and, upon such detection, it is able to provide an indication relative to this value.

The terms 'an indication relative to the value of the specific line regarding the selection of operational mode on the device side' mean information which indicates the value of the specific line at the device level. Thus, according to this indication it is possible to know if the device is able to handle a change on the specific line, while the device stays in the same operational mode.

Such characteristics allow testing an OTG device, while avoiding dropping USB connectivity and switching USB OTG mode several times during test.

In a context of USB interface on an OTG device, the operational modes can be either a Host mode or a Peripheral mode. The specific line allowing a selection of one operational mode can correspond to the ID line according to the USB OTG standard.

In one embodiment, the specific line can have two different values, one high value and one low value.

In one embodiment, the interface being a USB interface, the first operational mode being a Host mode and the second operational mode being a Peripheral mode, the indication provided by said device in the test state corresponds to the value of the line. In this case, the indication provided by the device can correspond directly to the value of the specific line. This value can be retrieved from the Host protocol stack of the device in order to be provided to a test equipment for instance. Thus, the test equipment is able to determine if the device is sensitive to a change on the specific line, meaning the ID line, without requiring an operational mode change. The device is in Host mode before the test, and stays in the Host mode during the test sequence, its sensitivity to the specific line being determined from the value detected by the device itself, inside its active stack for instance.

In one embodiment, the interface is a USB interface, the first operational mode is a Peripheral mode and the second operational mode is a Host mode. In this case, in the test state, the device can manage a power supply line as function of the value of the specific line, and the indication provided by said device in the test state corresponding to a power value on the power supply line.

When the device operates in a Peripheral mode, the indication provided by the device can correspond to the value on the power supply line. Here, the device is in Peripheral mode before the test, and stays in the Peripheral mode during the test sequence, its sensitivity to the specific line being tested via the value provided on the power supply line, by the device. Indeed, in normal state and in Peripheral mode, the specific line is at a low value and the device does not supply the power on the power supply line (like the VBUS line). When the device switches in the test state, and when the specific line goes up to the high value, the device provides the power as if it were in Host mode. Indeed, in the test state, the feature consisting in switching from the Peripheral to the Host mode as a function of the value on the specific line is disabled, but the device supplies the power on the power supply line (or the ID line) as if it were in Host mode. Consequently, the test equipment can check if the specific line is correctly handled on the device side based on the value of the power supply line, when the device is in Peripheral mode.

Even if the device is in Peripheral mode, it could be advantageous to offer a feature allowing to retrieve the value of the specific line, as it is described above when the device is in the Host mode. Thus, the device could receive a test command requiring the value on the specific line. It could retrieve this value inside the active stack, meaning the Peripheral stack and could provide this value.

A second aspect of the present invention relates to a method for testing a device linked to a test equipment via an interface, said device being able to work alternatively in a first operational mode or in a second operational mode and said test equipment being able to work in the second operational mode; said method comprising the following steps carried out on said test equipment, said device staying in the first operational mode and said test equipment staying in a second operational mode:
/a/ transmitting a test command indicating a beginning of a test;
/b/ modifying the value of a specific line of the interface;
/c/ receiving an indication relative to the value of the specific line on the device side; and
/c/ transmitting a test command indicating an end of the test. Thanks to these characteristics, the test equipment can check the behaviour of the device efficiently. Moreover, this equipment can support the second operational mode only.

In one embodiment, when the interface is a USB interface, the first operational mode is a Host mode and the second operational mode is a Peripheral mode, the received indication can correspond to the value of the specific line.

In one embodiment, when the interface is a USB interface, the first operational mode is a Peripheral mode and the second operational mode is a Host mode, the received indication can correspond to a power value on the power supply line.

A third aspect of the present invention relates to a device comprising means adapted to carry out a method according to the first aspect of the present invention.

It relates to a device able to work alternatively in a first operational mode or in a second operational mode;
wherein, in a normal state, said device carries out a selection of the operational mode between the first and the second operational mode as a function of a value of a specific line of an interface ; and
in a test state, said device ignores the value of said specific line regarding the selection of the operational mode;
said device comprising :
- a receiving unit adapted to receive a test command indicating a beginning of a test and a test command indicating an end of the test;
- a configuration unit adapted to configure the test state or the normal state depending on the test command;
- a transmitting unit adapted to provide an indication relative to the value of the specific line on the device side.

The interface being a USB interface, the first operational mode being a Host mode and the second operational mode being a Peripheral mode, the transmitting unit can provide an indication in the test state corresponding to the value of the line.

In one embodiment, the interface being a USB interface, the first operational mode being a Peripheral mode and the second operational mode being a Host mode; wherein, in the test state, the device is adapted to manage a power supply line as function of the value of the specific line; and
wherein the transmitting unit provides an indication in the test state corresponding to a power value on the power supply line.

A fourth aspect of the present invention relates to an equipment comprising means adapted to carry out a method according to the second aspect of the present invention.

It relates to an equipment for testing a device linked to said test equipment via an interface, said device being able to work alternatively in a first operational mode or in a second operational mode and said test equipment being able to work in the second operational mode;
said equipment comprising:
- a transmitting unit adapted to transmit a test command indicating a beginning of a test and a test command indicating an end of the test;
- a management unit adapted to modify the value of a specific line of the interface; and
- a receiving unit adapted to receive an indication relative to the value of the specific line on the device side.

In one embodiment, the interface being a USB interface, the first operational mode being a Host mode and the second operational mode being a Peripheral mode; the receiving unit receives an indication corresponding to the value of the specific line.

When the interface is a USB interface, the first operational mode is a Peripheral mode and the second operational mode is a Host mode;
the receiving unit can receive an indication corresponding to the power value on the power supply line.

A fifth aspect of the present invention relates to a system comprising a device according to the third aspect of the present invention and an equipment according to the fourth aspect of the present invention.

A sixth aspect of the present invention relates to a signal of test command adapted to trigger a configuration of a device to be tested, said device being able to work alternatively in a first operational mode or in a second operational mode;
wherein, in a normal state, said device carries out a selection of the operational mode between the first and the second operational mode, said
selection being based on a value of a specific line of an interface of the device; and in a test state, said device ignores the value of said specific line regarding the selection of the operational mode;
when said signal indicates a beginning of a test, said device configuring the test state and when said signal indicates an end of the test, said device configuring the normal state.

A seventh aspect of the present invention relates to a signal of specific test command to be sent to a device to be tested, said device being able to work alternatively in a first operational mode or in a second operational mode; wherein, in a normal state, said device carries out a selection of the operational mode between the first and the second operational mode, said selection being based on a value of a specific line of an interface of the device; and
in a test state, said device ignores the value of said specific line regarding the selection of the operational mode;
said signal requires, to the device, a value of said specific line.

### BRIEF DESCRIPTION OF THE DRAWINGS

The present invention is illustrated by way of example, and not by way of limitation, in the figures of the accompanying drawings and in which like reference numerals refer to similar elements and in which:
- Figure 1 illustrates the main steps of a method for testing a device according to one embodiment of the present invention;
- Figure 2 illustrates a USB OTG device to be tested by a test equipment according to one embodiment of the present invention;
- Figure 3 illustrates a system for testing an interface, which is adapted to limit the software impact for testing a device according to one embodiment of the present invention;
- Figures 4 and 5 illustrate a test applied on a system as illustrated in Figure 3, according to one embodiment of the present invention;
- Figure 6 illustrates a system for testing an interface, which is adapted to limit the hardware impact for testing a device according to one embodiment of the present invention;
- Figures 7 and 8 illustrate a test applied on a system as illustrated in Figure 6, according to one embodiment of the present invention;
- Figure 9 illustrates how the test equipment closes the test sequence according to one embodiment.

### DESCRIPTION OF PREFERRED EMBODIMENTS

It is stipulated that the reference signs in the claims do not limit the scope of the claims, but are merely inserted to enhance the legibility of the claims.

The present invention is described below in its application to test a USB OTG device. Thus, the targets of such test are USB OTG interface with D+, D-, ID, VBUS, GND lines of the USB interface, and moreover passive components as filter, ESD (for 'ElectroStatic Discharge') protection ...

D+ and D- lines correspond to the data exchange lines. GND line is the line providing the ground. VBUS line is the line providing power. According to USB standard, the power is providing by the Host.

In the following sections, the specific line corresponds to the ID line. When the ID pin is in high impedance, the ID line has a high value and when the ID pin is in low impedance, the ID line has a low value. Actually, regarding the context of one embodiment of the present invention, the ID line can takes two values, a high value and a low value.

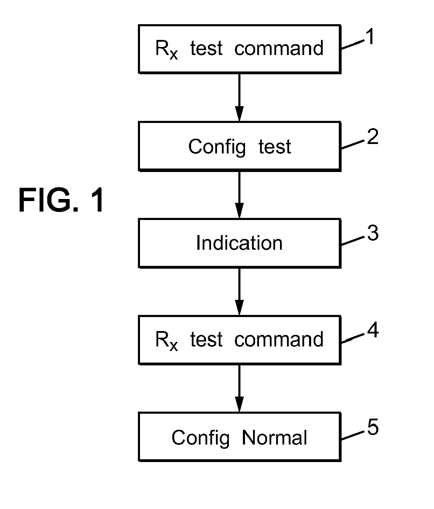

Figure 1 illustrates the main steps of a method for testing a device according to one embodiment of the present invention.

The device and the test equipment can be linked via an interface according USB standard. No limit is associated to this characteristic regarding the present invention. Indeed, it is possible to link the device and the test equipment via two interfaces, one according to USB standard and one according to UART interface (for 'Universal asynchronous receiver-transmitter'). The UART can be used to send test commands from the equipment to the device, notably.

In the following section, for illustrative purpose, the exchanges between the test equipment and the device are performed through the USB OTG interface. The device to be tested is able to work alternatively in a first operational mode or in a second operational mode. It can be configured either, in a normal state, wherein a selection of the operational mode between the first and the second operational mode is a function of a value of a specific line of an interface, or in a test state, wherein the value of said specific line is ignored regarding the selection of the operational mode.

The device stays in the first operational mode, and in a step 1, it receives a test command indicating a beginning of a test.

In a step 2, the device configures the test state. In a step 3, it provides an indication relative to the value of the specific line on the device side. In a step 4, it receives a test command indicating an end of the test. And, in a step 5, the normal state is configured because the test is finished.

The corresponding steps are performed on the equipment side. In addition, the equipment requires a change on the specific line in order to test the correct behaviour of the device in this condition.

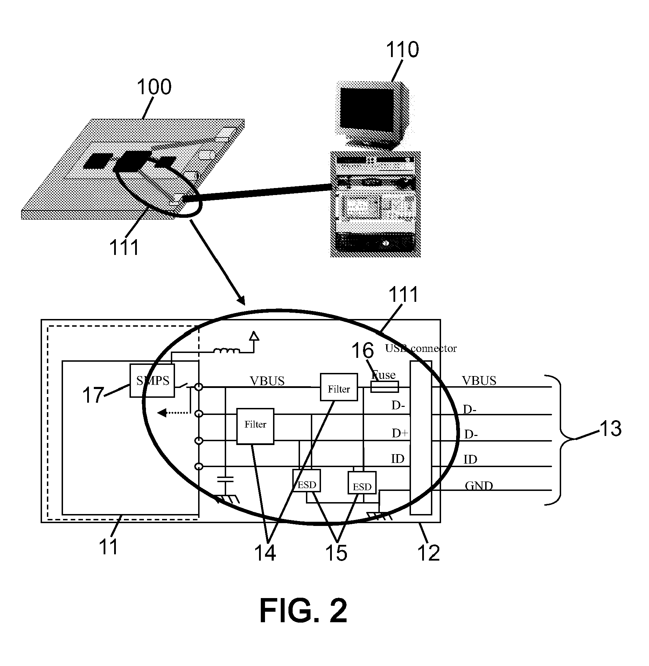

Figure 2 illustrates a USB OTG device 100 to be tested by a test equipment 110 according to one embodiment of the present invention.

This USB OTG device comprises a management part 11, which is mainly software part, and a connector part 12 which is mainly hardware part. The connector 12 is linked to the test equipment 110 via a USB interface 13.

The interface 13, provided at the connector level, comprises:
- a VBUS line which is a power supply line;
- D- and D+ lines for data transmission;
- an ID line which is a specific line allowing a selection of one operational mode; and
- a GND line which is the line for ground.

The connector part 12 and the management part 11 are linked via an internal interface 111. This internal interface is illustrated in detail in the low part of Figure 2.

This internal interface 111 comprises filters 14, ESD units 15 and a fuse 16.

In one embodiment of the present invention, the goal of test is to check both the interface 13, which is an external interface relative to the device, and the internal interface 111 which links the connector part 12 and the management part 11 inside the device.

In association with the management part 11, the device comprises a SMPS 17 ('Switch Mode Power Supply') in charge of handling the power supply on VBUS.

No limitation is associated to the way of implementation of the main steps of method according to the present invention.

Notably, it can be advantageous to limit software development on test equipment side and on device side for testing an USB OTG interface. Thus, in a first variant of the present invention, the test equipment and the device embed testing capability on the hardware.

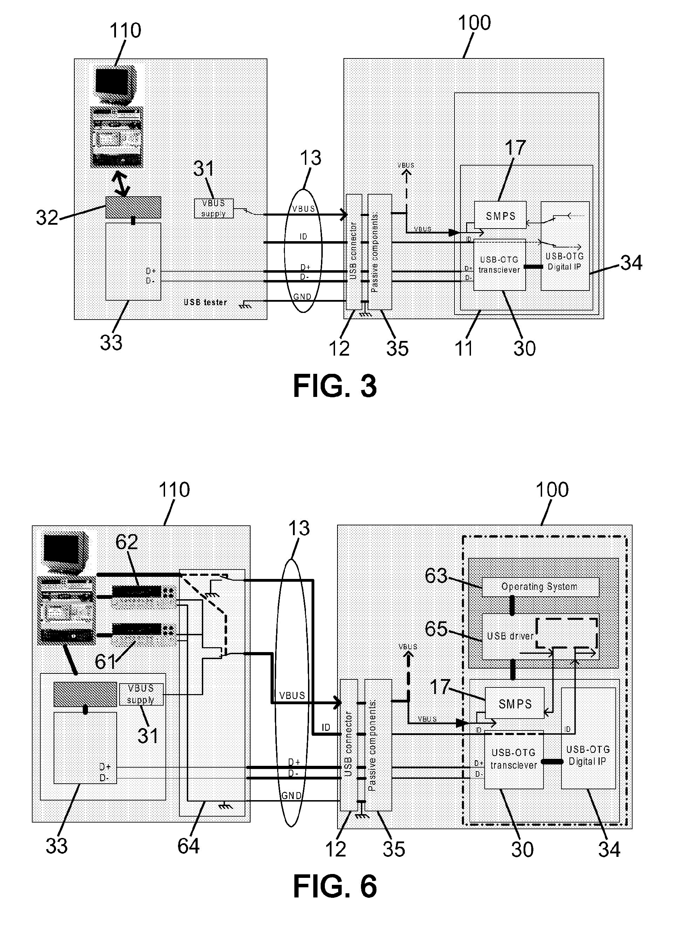

Figure 3 illustrates a system for testing an interface, which is adapted to limit the software impact to implement a method for testing according to one embodiment of the present invention.

The device 100 comprises a connector 12, a set of passive components 35, and a management part 11. More precisely, this management part 11 comprises a SMPS unit 17, a USB OTG digital interface 34 and a USB OTG transceiver 30. The equipment 110 comprises a management part 11, a USB test controller 32 which is in charge of managing the test of the device, and a VBUS supply unit 31.

The test equipment 110 is connected to the device 100 using the interface 13. This test equipment comprises a VBUS supply unit 31, a USB test controller unit 32 adapted to control a management part 33. This management part 33 comprises itself a Host digital IP and a Transceiver part.

Initially, the device is the normal state. Firstly, now, it is possible to test the connexion between the test equipment and the device. Indeed, the test equipment can send, respectively can receive, data to the device, respectively from the device. Based on such connexion, it is possible to execute some particular tests of some device features.

The following section describes a test sequence to be performed in a test system according to one embodiment of the present invention, when the test equipment works in Host mode and the device to be tested works in Peripheral mode. In these conditions, ID Pin is in high impedance (meaning the value on the ID line is the high value). The power is supplied by the test equipment 110 working in Host mode.

When this connexion is established between the test equipment and the device, the test equipment 110 can launch a USB OTG interface test by handling a test sequence. For that purpose, firstly, the test equipment 110 sends a test command to the device. This test command makes the device operating in test state.

No limitation is associated to the present invention regarding the implementation of such test command, in any variant or any embodiment of the present invention.

In one embodiment of the present invention, the interface to be tested is defined in USB specification revision 2.0. In this case, five different test states are defined: Test_SE0_NAK, Test_J, Test_K, Test_Packet and Test_Force_Enable. In addition to these five test states, the specification allows implementing vendor specific test states.

In this context, it is possible to add a new test state in this specification. Alternatively, it is possible to use the flexibility offered by the specification to have vendor specific test states.

When the device 100 receives this test command, it disables the feature consisting in selecting an operational mode depending on the value of the ID line. Thus, even if the value on the ID line is modified, no switch of operational mode is triggered. When the mode switch feature is disabled, the device stays operating in the same operational mode, independently of the value of the ID line.

Moreover, upon reception of the test command, the device handles VBUS power supply depending on the value of the ID line. More precisely, on the device side, power is supplied on VBUS when the value of the ID line is low, and power is not supplied on VBUS when the value of the ID line is high.

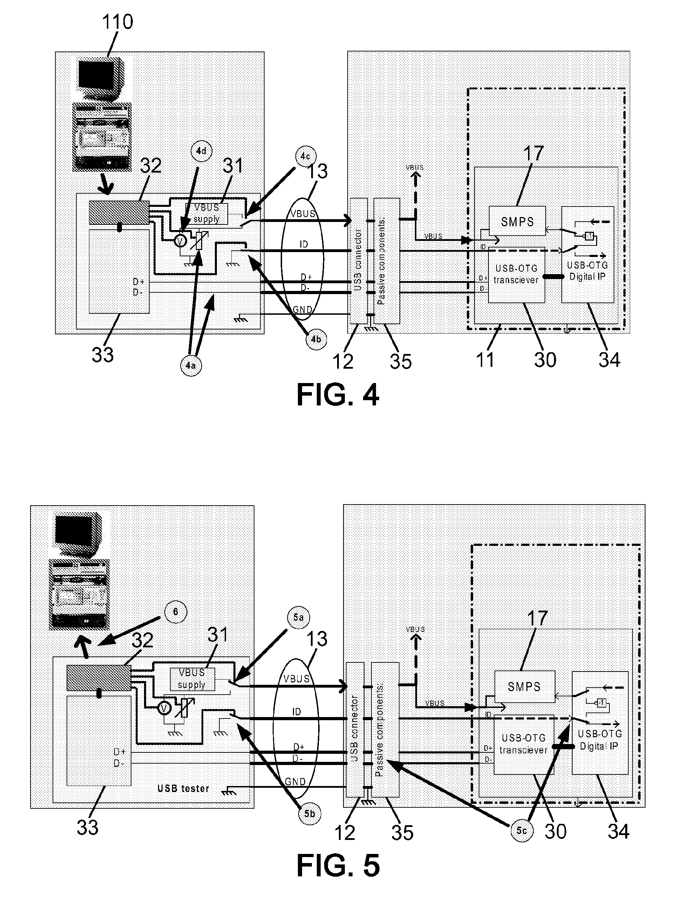

Now, the test equipment and the device are connected, and the device is operating in test state. The test equipment can now handle the following test sequence, as illustrated in figure 4 and figure 5.

In a step 4-a, the test equipment requests to the device a value of current that the SMPS unit 17 is able to provide. Then the test equipment set the load impedance accordingly. This step 4-a is an optional step. Indeed, this value of current can be known according to any other method, as per pre-configuration for instance.

In a step 4-b, the test equipment 110 forces the ID line to the ground (GND), meaning to the low value. Consequently, the SMPS unit of the device is switched on, and the device provides power on the VBUS line.

In one embodiment, a dedicated circuitry, or dedicated equipment, can be implemented on the test equipment in order to avoid a conflict, or current leakage, between the test equipment and the device regarding the VBUS power supply. In example, this should be performed by using unipolar power supply on tester side to ensure no current leakage from product to tester and by decreasing voltage on test equipment side to ensure no current leakage from test equipment to device to be tested.

In a step 4-c, the test equipment 110 switches the VBUS line to the load impedance.

In a step 4-d, the test equipment performs a voltage measurement provided by device on the VBUS line. Such a measurement corresponds to a current measurement implicitly. Other measurements could be performed easily, in order to check power supply integrity. Indeed, it is possible to measure noise level, glitch... It is possible to check if passive components are well connected.

When the test equipment detects that the device does not supply power on the VBUS, although it forces the ID line to the low value, the test equipment detects a problem but it is not able to determine the real cause of this problem. Indeed, the cause could be linked to the fact that the device does not detect the low value of the ID line or could be linked to any other problems, notably between the detection of the value and the supply of power.

In one embodiment, consequently, in a step 4-e, it could be advantageous to introduce a specific test command adapted to retrieve a value of the ID line as detected on the device side. Upon reception of this specific test command, the device provides the value of the ID line detected on its side. Such a specific command allows improving failure detection and determining root causes. This step could be performed in parallel with the step 4a. This step 4-e is only an optional step.

Now, the test equipment will close the test sequence and determine a status for this test, as illustrated in figure 5.

For that purpose, in a step 5-a, the USB test equipment switches VBUS signal from the load impedance to the device, in order to supply power to the device.

In a step 5-b, the test equipment forces the value on the ID line to the high impedance, to come back to the initial configuration, as before beginning of the test sequence.

In a step 5-c, the test equipment sends a test command to the device to indicate the end of the test. Upon reception of this test command, the device switches from the test state to the normal state.

In a step 6, the test equipment determines a status corresponding to the test. This status can indicate that the device works correctly (status=OK) or the device does not work correctly (status= KO). In this last case, when the test equipment is able to determine a failure root cause, the cause can be added advantageously to the status.

Alternatively, in a second variant, it can be advantageous to limit hardware development on test equipment side and on device side regarding the test of USB OTG interface. Thus, test sequence computation can be performed at software level on test equipment and on device side.

Figure 6 illustrates a system for testing an interface, which is adapted to limit the hardware impact for implementing a test sequence according to one embodiment of the present invention.

The test equipment uses a "standard" USB host interface. Some units are added in the test equipment in order to test the full USB OTG interface.

More precisely, the test equipment comprises at least a programmable load unit 62 adapted to carry out software programs for managing test sequences according to one embodiment. It can comprise also some measurement apparatus 61 to perform a detail checking of the device, like a voltmeter or an oscilloscope for instance. There is also a VBUS supply unit 31.

Moreover, a programmable switch board 64 is in charge of managing test actions according to one embodiment.

The device 100 to be tested comprises a software unit 65 corresponding to a USB driver, which is linked to the operating system 63, and which is adapted to manage the reception of a test command in order to select a state between a test state and a normal state and to configure the selected state.

In one embodiment, the test equipment 110 is connected to the device 100 via the USB interface 13 in normal way. At this step, it is similar to the first variant described above.

When the USB OTG interface test sequence is started, the test equipment 110 sends a test command to the device in order to put the device in the test state. This test command indicates the beginning of the test. Here, upon reception of this test command, the USB driver 65 switches in test state on the device side. This step can be carried out as described in the first variant.

The test equipment 110 can send the test command from the software level and not from the hardware level in order to limit the impact on hardware implementation.

Moreover, the reception of this test command can be handled at the USB driver level instead of the USB OTG digital interface 34.

It could be easy to implement such a software solution, when a test application unit already exists on the device. In this case, this test application unit receives the command and instructs the USB driver 65 to switch its behaviour into the test state.

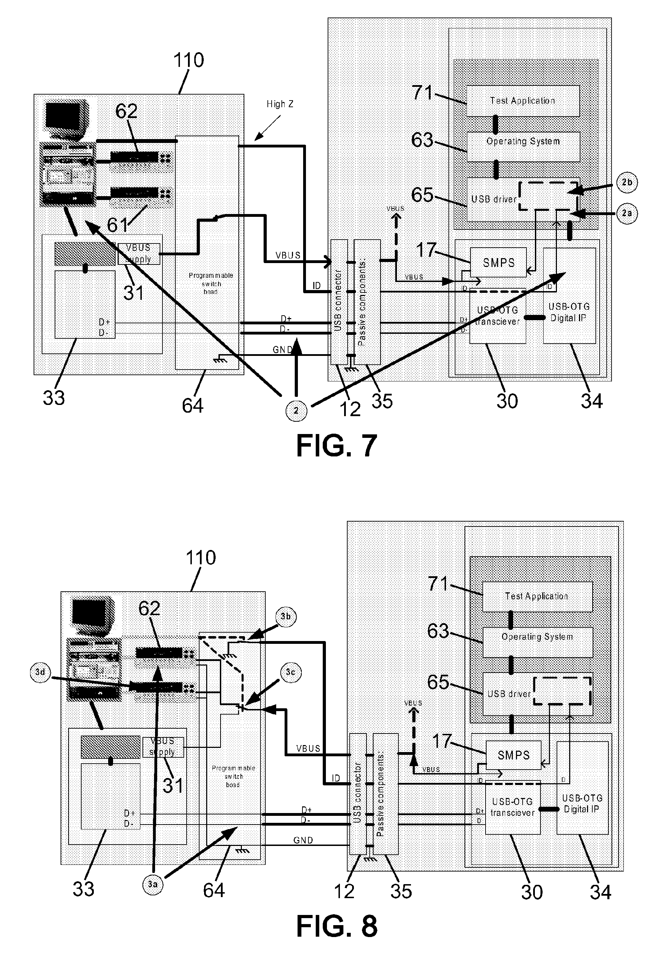

In case of software implementation, there is no need for a change of the USB specification and for vendor specific commands. In such embodiment, when a USB driver receives a test command indicating the beginning of the test, the actions described below in reference to Figure 7 are performed.

In a step 2-a, the feature consisting in switching of operation mode is disabled

In a step 2-b, a monitoring of the value of the ID line is started and the VBUS power is supplied (by controlling the SMPS unit) depending on the value of the ID line:
- if the ID line is grounded, the VBUS power is supplied;
- if the ID line is floating, the VBUS power is not supplied.

The test equipment handles the test sequences, as illustrated in Figure 8. Steps 3-a to 3-d of Figure 8 correspond to step 4-a to 4-d of Figure 4, and they are already described below.

Figure 8 illustrates one embodiment wherein a test application software 71 is implemented to handle at a high level the test sequence on the device.

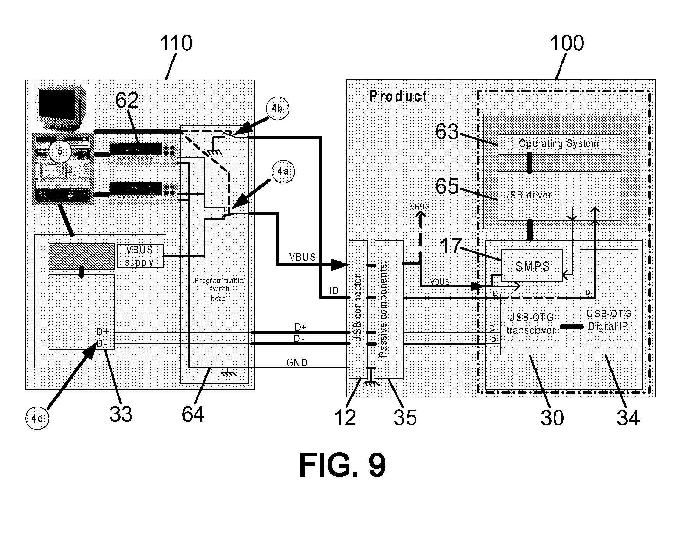

Figure 9 illustrates how the test equipment closes the test sequence according to one embodiment.

In step 4-a, the test equipment 110 switches the VBUS signal from the load impedance to the device.

In step 4-b, the test equipment 110 forces the ID line to high impedance.

In step 4-c, the test equipment 110 sends a test command to the device indicating the end of test. Upon reception of this test command, the device switches from the test state to the normal state. Thus, the control by the USB driver on the SMPS unit and on the ID line via the USB digital IP is disabled.

Same information as described in the first variant can be provided at the end of a test according to the second variant.

The present application can be applied also when the device is in Host operational mode, the equipment being in Peripheral mode. In this case, the test equipment is able to determine if the behaviour of the device is correct based on a specific test command adapted to required the value of the ID line on device side.

The following sequence can be applied. The test equipment sends a test command indicating the beginning of the test sequence. Upon reception of this command, the device configures the test state. The test equipment modifies the ID line value. Then, it sends to the device a specific test command. Upon reception of this specific test command, the device can retrieve the value of the ID line inside its Host protocol stack in order to provide this value to the test equipment.

For instance, in one embodiment, this method can allow testing USB OTG interface by limiting software development on test equipment side and on device side as described for the first variant. Here, the test equipment works in Peripheral mode and the device to be tested works in Host mode.

The test equipment and the USB digital interface on the device embed testing capability at the hardware level including special USB command which can allow triggering a test sequence automatically.

Initially, the test equipment is connected to the device using USB interface. The USB connectivity is working between the test equipment and the device.

The test equipment can launch USB OTG interface test as follow, according to one embodiment of the present invention. The test equipment sends command to product through USB bus. Upon reception of this command the device works in test state. When the device receives this command, a monitoring of the value of the ID line is started and the VBUS power is supplied (by controlling the SMPS unit) depending on the value of the ID line:
- if the ID line is grounded, the VBUS power is supplied;
- if the ID line is floating, the VBUS power is not supplied.

These actions are performed in a way allowing to keep VBUS alive.

Then, the test equipment handles the following test sequences:
- performing voltage measurement (implicitly current measurement) of VBUS line provided by device. Other measurements should be performed to ensure power supply integrity (noise, glitch, ...) or to ensure that passive components are well connected (eg: VBUS decoupling capacitor on device side);
- switching VBUS signal from load impedance to test equipment VBUS supply;
- switching ID pin from ground to high impedance. It can correspond to the fact that the SMPS unit is switched off;
- optionally, performing voltage measurement (or current measurement) on VBUS to ensure that VBUS is no more provided by the device (in order to determine that the SMPS unit is well switched OFF).

Then, the test equipment closes the test sequence and sends a corresponding status.

The test equipment forces ID pin to ground, and consequently, the test equipment does not provide any more VBUS, and the device switches on VBUS supply. The USB tester sends a test command to make the device operating in normal state. Upon reception of this command, the device disables the particular control of SMPS and of ID pin.

Some other variants could be implemented, and notably any combination of the first and the second variant.

It is possible to mix different variants together.

This invention is applicable for all devices supporting USB OTG capability, like peripherals, portable devices ...

## Claims

1. Method for testing a device which is able to work alternatively in a first operational mode or in a second operational mode;
wherein, in a normal state, said device carries out a selection of the operational mode between the first and the second operational mode, said selection being based on a value of a specific line of an interface of the device; and
in a test state, said device ignores the value of said specific line regarding the selection of the operational mode;
said method comprising the following steps, which are carried out on said device staying in the first operational mode:
/a/ receiving (1) a test command indicating a beginning of a test;
/b/ configuring (2) the test state;
/c/ providing (3) an indication relative to the value of the specific line on the device side;
/d/ receiving (4) a test command indicating an end of the test; and
/e/ configuring (5) the normal state.

2. Method for testing an interface according to claim 1, the interface being a USB interface, the first operational mode being a Host mode and the second operational mode being a Peripheral mode;
wherein the indication provided by said device in the test state corresponds to the value of the line.

3. Method for testing an interface according to claim 1, said interface being a USB interface, the first operational mode being a Peripheral mode and the second operational mode being a Host mode;
wherein, in the test state, the device manages powering a power supply line as function of the value of the specific line;
the indication provided by said device in the test state corresponding to a power value on the power supply line.

4. Method for testing a device linked to a test equipment via an interface,
said device being able to work alternatively in a first operational mode or in a second operational mode and said test equipment being able to work in the second operational mode;
said method comprising the following steps carried out on said test equipment,
said device staying in the first operational mode and said test equipment staying in a second operational mode:
/a/ transmitting a test command indicating a beginning of a test;
/b/ modifying the value of a specific line of the interface;
/c/ receiving an indication relative to the value of the specific line on the device side; and
/c/ transmitting a test command indicating an end of the test.

5. Method of testing an interface according to claim 4, the interface being a USB interface, the first operational mode being a Host mode and the second operational mode being a Peripheral mode;
wherein the received indication corresponds to the value of the specific line.

6. Method for testing an interface according to claim 4 or 5, said interface being a USB interface, the first operational mode being a Peripheral mode and the second operational mode being a Host mode;
wherein the received indication corresponds to the power value on the power supply line.

7. Device (100) able to work alternatively in a first operational mode or in a second operational mode;
wherein, in a normal state, said device carries out a selection of the operational mode between the first and the second operational mode as a function of a value of a specific line of an interface ; and
in a test state, said device ignores the value of said specific line regarding the selection of the operational mode;
said device comprising :
- a receiving unit (11) adapted to receive a test command indicating a beginning of a test and a test command indicating an end of the test;
- a configuration unit (34, 65) adapted to configure the test state or the normal state depending on the test command;
- a transmitting unit (34, 65) adapted to provide an indication relative to the value of the specific line on the device side.

8. Device (100) according to claim 7, the interface being a USB interface, the first operational mode being a Host mode and the second operational mode being a Peripheral mode;
wherein the transmitting unit provides an indication in the test state corresponding to the value of the line.

9. Device (100) according to claim 7, said interface being a USB interface, the first operational mode being a Peripheral mode and the second operational mode being a Host mode;
wherein, in the test state, the device is adapted to manage a power supply line as function of the value of the specific line; and
wherein the transmitting unit provides an indication in the test state corresponding to a power value on the power supply line.

10. Equipment (110) for testing a device linked to said test equipment via an interface, said device being able to work alternatively in a first operational mode or in a second operational mode and said test equipment being able to work in the second operational mode;
said equipment comprising:
- a transmitting unit (33) adapted to transmit a test command indicating a beginning of a test and a test command indicating an end of the test;
- a management unit (32, 61) adapted to modify the value of a specific line of the interface; and
- a receiving unit (33) adapted to receive an indication relative to the value of the specific line on the device side.

11. Equipment (110) of testing an interface according to claim 10, the interface being a USB interface, the first operational mode being a Host mode and the second operational mode being a Peripheral mode;
wherein the receiving unit receives an indication corresponding to the value of the specific line.

12. Equipment (110) for testing an interface according to claim 10 or 11, said interface being a USB interface, the first operational mode being a Peripheral mode and the second operational mode being a Host mode;
wherein the receiving unit receives an indication corresponding to the power value on the power supply line.

13. System for testing a device able to work alternatively in a first operational mode or in a second operational mode and said test equipment being able to work in the second operational mode;
said system comprising a device (100) according to any one of claims 7 to 9 and an equipment (110) according to any one of claims 10 to 12.

14. Signal of test command adapted to trigger a configuration of a device to be tested, said device being able to work alternatively in a first operational mode or in a second operational mode;
wherein, in a normal state, said device carries out a selection of the operational mode between the first and the second operational mode, said selection being based on a value of a specific line of an interface of the device; and
in a test state, said device ignores the value of said specific line regarding the selection of the operational mode;
when said signal indicates a beginning of a test, said device configuring the test state and when said signal indicates an end of the test, said device configuring the normal state.

15. Signal of specific test command to be sent to a device to be tested, said device being able to work alternatively in a first operational mode or in a second operational mode;
wherein, in a normal state, said device carries out a selection of the operational mode between the first and the second operational mode, said selection being based on a value of a specific line of an interface of the device; and
in a test state, said device ignores the value of said specific line regarding the selection of the operational mode;
said signal requires, to the device, a value of said specific line.
